# EUROPEAN PATENT APPLICATION

(11) **EP 3 396 566 A1**
(43) Date of publication of application: **31.10.2018**
(21) Application number: 18154377.8
(22) Date of filing: 31.01.2018
(51) Int. Cl.: G06F 17/30

(54) **METHOD, INFORMATION PROCESSING APPARATUS AND PROGRAM**

(30) Priority: 28.04.2017 JP 2017090562
(71) Applicant: FUJITSU LIMITED, Kanagawa 211-8588 (JP)
(72) Inventor: NOGAMI, Kenji, Kanagawa, 211-8588 (JP); HATA, Sahoko, Kanagawa, 211-8588 (JP)
(74) Representative: Hoffmann Eitle

(57) **Abstract**

A method executed by a computer, the method includes receiving an image, executing an image analysis of the received image, generating, based on the image analysis, text data indicating a candidate for a model of a vehicle included in the image, when the text data indicates a first model as the candidate, executing a first search by using the text data as a search keyword, and displaying, on a display screen, the first model and a first result of the first search.

## Description

### TECHNICAL FIELD

The embodiments discussed herein are related to a method, an information processing apparatus and a non-transitory computer-readable storage medium.

### BACKGROUND ART

There has been known a technique applicable to an image search device configured such that, when a search condition statement is inputted, an image search device conducts search by using keywords attached to image data as search conditions, and then search results are displayed while organizing the search results depending on classification names attached to the image data. Meanwhile, there has also been known a technique applicable to an image search device configured to classify thumbnails depending on categories and to display the thumbnails by sorting the thumbnails depending on the degree of similarity. Related techniques are discussed in Japanese Laid-open Patent Publications Nos. 2003-76694 and 2007-317034.

### SUMMARY

### [Technical Problem]

The aforementioned techniques do not consider display of a search result corresponding to an inputted image.

### [Solution to Problem]

According to an aspect of the invention, a method executed by a computer, the method includes receiving an image, executing an image analysis of the received image, generating, based on the image analysis, text data indicating a candidate for a model of a vehicle included in the image, when the text data indicates a first model as the candidate, executing a first search by using the text data as a search keyword, and displaying, on a display screen, the first model and a first result of the first search.

### [Advantageous Effects of Invention]

According an aspect of the disclosure, a search result corresponding to an inputted image is intelligibly displayed.

### BRIEF DESCRIPTION OF DRAWINGS

FIG. 1 is a diagram illustrating an example of a system of a first embodiment;
FIG. 2 is a diagram illustrating an example of a data center of the first embodiment;
FIG. 3 is a diagram illustrating an example of a display screen before transmission of the first embodiment;
FIG. 4A is a diagram illustrating an example of search result images of the first embodiment;
FIG. 4B is another diagram illustrating the example of the search result images of the first embodiment;
FIG. 5 is a flowchart illustrating an example of search processing of the first embodiment;
FIG. 6 is a diagram illustrating an example of a data center of a second embodiment;
FIG. 7 is a diagram illustrating an example of vehicle information stored in a vehicle information storage unit of the second embodiment;
FIG. 8A is a diagram illustrating an example of search result images of the second embodiment;
FIG. 8B is another diagram illustrating the example of the search result images of the second embodiment;
FIG. 9 is a flowchart illustrating an example of search processing of the second embodiment;
FIG. 10 is a diagram illustrating an example of search result images of a third embodiment;
FIG. 11A is a diagram illustrating another example of search result images of the third embodiment;
FIG. 11B is another diagram illustrating the other example of the search result images of the third embodiment; and
FIG. 12 is a diagram illustrating a hardware configuration example of a computer.

### DESCRIPTION OF EMBODIMENTS

Embodiments of a search program, a search device, and a searching method disclosed in this application are described below in detail based on the drawings. It is to be noted that this disclosure is not limited to the embodiments disclosed herein. In addition, the embodiments described below may be combined as appropriate within a range not causing any contradiction.

### [First Embodiment]

### (Explanation of Entire System)

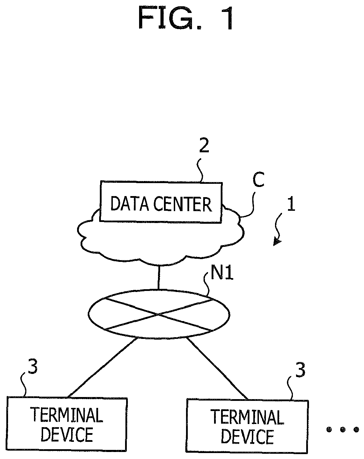

First, an example of a system 1 according to a first embodiment is described. FIG. 1 is a diagram illustrating the example of the system 1 of the first embodiment. The system 1 includes a data center 2 and terminal devices 3. The data center 2 and the terminal devices 3 are communicably coupled to one another through a network N1, and are thus made capable of exchanging a variety of information. As an aspect of the network N1, it is possible to employ any desired type of communication networks regardless of whether such a communication network is wired or wireless, examples of which include: mobile telecommunications involving mobile telephones and the like; a local area network (LAN); a virtual private network (VPN); and the like.

The data center 2 is a device configured to conduct search based on an image transmitted from each terminal device 3, and to provide information concerning the image. Specifically, the data center 2 has a search function. For instance, the data center 2 is a computer such as a server computer. Here, the data center 2 is implemented in the form of a cloud C composed of multiple computers. However, the data center 2 may be implemented by using a single computer.

Each terminal device 3 is a device employed by a user who wishes supply of information. The terminal device 3 is a portable terminal device such as a tablet terminal, a smartphone, and a personal digital assistant (PDA). Instead, the terminal device 3 may be a computer such as a personal computer.

The system 1 of this embodiment is a system used for car sharing, for example. In the system 1, based on an image of a vehicle transmitted from the terminal device 3, the data center 2 determines vehicle models which are likely to be included in the image. Then, the data center 2 outputs text data corresponding to the determined vehicle models. Thereafter, the data center 2 searches for rentable vehicles by using the text data as search keywords, and causes the terminal device 3 to display search results that are organized depending on the vehicle models.

### (Configuration of Data Center 2)

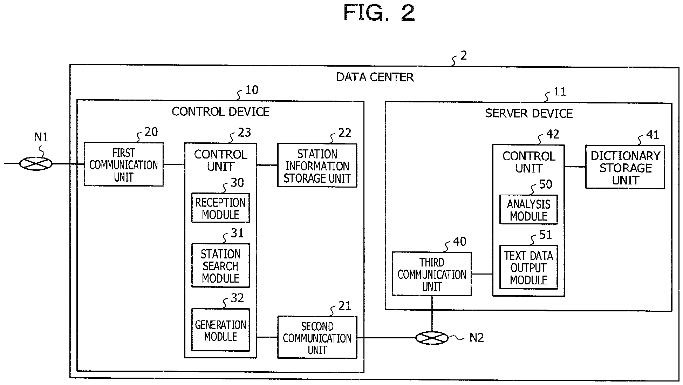

Next, an example of the data center 2 of the first embodiment is described by using FIG. 2. FIG. 2 is a diagram illustrating the example of the data center 2 of the first embodiment. As illustrated in FIG. 2, the data center 2 of this embodiment includes a control device 10 and a server device 11. The control device 10 and the server device 11 are coupled to each other through a network N2 provided in the data center 2, and thus made communicable to each other. This network N2 may be communicably coupled to an external network such as the Internet and made communicable with the terminal device 3 through the network N1. Meanwhile, the network N2 may be made communicable with another network through the network N1. As with the network N1, this network N2 may also employ any desired type of communication networks. In the meantime, although the data center 2 includes the control device 10 and the server device 11 in the example of FIG. 2, the data center 2 may include one of these devices instead.

The control device 10 is a physical server such as a server computer, which is provided in the data center 2. The control device 10 controls the server device 11. The control device 10 includes a first communication unit 20, a second communication unit 21, a station information storage unit 22, and a control unit 23. Note that the control device 10 may also include various other functional units in addition to the functional units illustrated in FIG. 2, such additional functional units being generally included in a publicly known computer. Examples of the additional functional units include functional units serving as various input devices and voice output devices.

The first communication unit 20 is communicably coupled to the terminal device 3 through the network N1 and configured to transmit and receive various kinds of information. For example, the first communication unit 20 is a communication interface such as a network interface card (NIC).

The second communication unit 21 is communicably coupled to a third communication unit 40 of the server device 11 through the network N2 provided in the data center 2 and configured to transmit and receive various information. For example, the second communication unit 21 is another communication interface.

The station information storage unit 22 is a storage device that stores various data. For example, the station information storage unit 22 is a storage device such as a hard disk drive, a solid state drive (SSD), and an optical disk drive. The station information storage unit 22 stores rentable vehicle information. For example, details of the rentable vehicle information include: location information on stations holding rentable vehicles; vehicle models of the rentable vehicles; rentable dates and hours; information on accessories equipped in the rentable vehicles; numbers of seats in the rentable vehicles; image file names of the rentable vehicles; and so forth. The details of the rentable vehicle information are registered, deleted, or updated through the first communication unit 20 by using a not-illustrated terminal of an administrator of the car sharing service, for example.

The control unit 23 is a unit that controls the entire control device 10. The control unit 23 may employ an electronic circuit such as a central processing unit (CPU) and a micro processing unit (MPU), or an integrated circuit such as an application specific integrated circuit (ASIC) and a field programmable gate array (FPGA).

The control unit 23 includes an internal memory to store data as well as programs that define various processing procedures, and executes various processing by using the data and the programs. The control unit 23 functions as various processing units as a consequence of operation of the various programs. For example, the control unit 23 includes a reception module 30, a station search module 31, and a generation module 32.

The reception module 30 conducts various receptions. For example, the reception module 30 receives log-in of a user by displaying a log-in screen on the terminal device 3 in response to a request from the terminal device 3 received through the first communication unit 20. Meanwhile, when the user successfully logs in, the reception module 30 receives input of information concerning a vehicle that the user desires to rent by causing the terminal device 3 to display an input screen for inputting the information on the desired vehicle. For example, the reception module 30 receives, from the terminal device 3, information on an image of the vehicle that the user desires to rent, information on the date and hour when the user desires to rent the vehicle, and so forth. The reception module 30 transmits the image of the vehicle received from the terminal device 3 to the server device 11 through the second communication unit 21. The reception module 30 receives text data concerning vehicle models from the server device 11, and outputs the text data to the station search module 31.

The station search module 31 searches for stations each holding the rentable vehicle based on the information on the date and hour when the user desires to rent the vehicle and on the text data concerning the vehicle models outputted from the server device 11. The station search module 31 searches for stations, which are able to rent the vehicle satisfying the conditions including the desired date and hour for the rental, from the rentable vehicle information stored in the station information storage unit 22 by using the text data as search keywords. Specifically, the station search module 31 searches for rentable vehicles matching the search keywords. The text data concerning the vehicle models is described later.

The generation module 32 generates images to be displayed on the terminal device 3, that is, a display screen, based on search results by the station search module 31. To be more precise, the generation module 32 generates the images, each of which is organized depending on the corresponding vehicle model when the search results are displayed on the terminal device 3. In the meantime, the generation module 32 generates images that enable switching display of the search results. Each image thus generated includes the vehicle model, the location of the station, the image of the vehicle held at the station, and the like.

The server device 11 is a physical server such as a server computer, which is provided in the data center 2. The server device 11 includes the third communication unit 40, a dictionary storage unit 41, and a control unit 42. Although the single server device 11 is illustrated in the example of FIG. 2, it is possible to provide a desired number of the server devices 11.

The third communication unit 40 is communicably coupled to the second communication unit 21 of the control device 10 through the network N2 provided in the data center 2 and configured to transmit and receive various information. For example, the third communication unit 40 is still another communication interface.

The dictionary storage unit 41 is a storage device that stores various data. For example, the dictionary storage unit 41 is a storage device such as a hard disk drive, an SSD, and an optical disk drive. The dictionary storage unit 41 stores a vehicle model identification dictionary, which is generated by machine learning using learned data including images of the respective vehicle models and using leaned data not including the images of the respective vehicle models. The vehicle model identification dictionary is a dictionary formed by the machine learning about correlations between the images of the vehicle models and the text data corresponding to the vehicle models. As a machine learning algorithm, it is possible to use deep learning such as convolutional neural networks (CNN), for example. The text data corresponding to the vehicle models includes names of the vehicle models, for instance.

The control unit 42 is a unit that controls the entire server device 11. The control unit 42 may employ an electronic circuit such as a graphic processing unit (GPU), or an integrated circuit such as an application specific integrated circuit (ASIC) and a field programmable gate array (FPGA).

The control unit 42 includes an internal memory to store data as well as programs that define various processing procedures, and executes various processing by using the data and the programs. The control unit 42 functions as various processing units as a consequence of operation of the various programs. For example, the control unit 42 includes an analysis module 50 and a text data output module 51.

The analysis module 50 performs an image analysis by using the dictionary stored in the dictionary storage unit 41. When the analysis module 50 receives an image transmitted from the control device 10 through the third communication unit 40, the analysis module 50 analyzes the received image by using the dictionary and identifies vehicle models that are likely to be included in the image. Next, the analysis module 50 calculates a score for each of the identified vehicle models. The analysis module 50 selects multiple vehicle models from the top such as top two vehicle models from the vehicle models that are likely to be included in the image, and calculates scores as values indicating evaluations of the respective selected vehicle models. The analysis module 50 calculates the scores such that a sum of the scores becomes equal to "1.0", for example. The score becomes higher as the vehicle model corresponding to the score is more likely to be included in the image. Here, the number of selected vehicle models is preset.

The text data output module 51 outputs the text data and the scores of the vehicle models identified by the analysis module 50. Specifically, the text data output module 51 outputs a result of identification of the vehicle models by the analysis module 50 in the form of the text data. The text data output module 51 outputs the text data associated with the score in terms of each vehicle model.

As described above, the server device 11 identifies the vehicle models that are likely to be included in the image by the image analysis performed by way of artificial intelligence, which learns the correlations between the images of multiple vehicle models and the corresponding text data of the vehicle models by the machine learning. Thus, the server device 11 outputs the text data and the scores of the vehicle models that are likely to be included in the image, one by one for each of the vehicle models.

### (Example of Station Search)

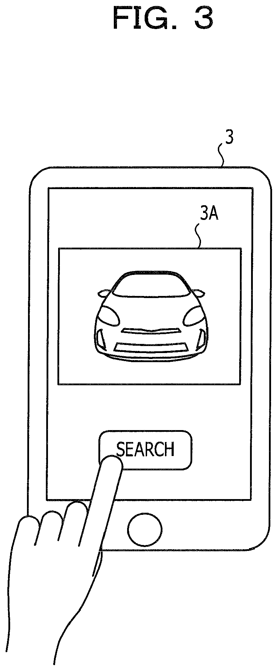

Next, station search according to the first embodiment is described in detail. When the user completes the log-in and prepares the vehicle that the user wishes to rent, the terminal device 3 displays an image illustrated in FIG. 3. FIG. 3 is a diagram illustrating an example of a display screen before transmission according to the first embodiment. When the user touches (clicks) a search button, a vehicle image 3A is transmitted to the control device 10 together with other information such as the desired date and hour for the rental.

Upon receipt of the vehicle image 3A and the like, the control device 10 transmits the received image 3A to the server device 11. The server device 11 analyzes the received image 3A to identify the vehicle models that are likely to be included in the image 3A, then selects the top two vehicle models, for instance, from the vehicle models that are likely to be included in the image 3A, and calculates the scores of the respective vehicle models. For example, the server device 11 selects a vehicle model "ABC" which is a first vehicle model and a vehicle model "EFG" which is a second vehicle model. Then, in the case where the vehicle model "ABC" is more likely to be included in the image 3A than is the vehicle model "EFG", the server device 11 calculates the score of the vehicle model "ABC" as "0.9" and calculates the score of the vehicle model "EFG" as "0.1", for example.

Next, the server device 11 outputs "ABC" as the text data and "0.9" as the score regarding the vehicle model "ABC", and outputs "EFG" as the text data and "0.1" as the score regarding the vehicle model "EFG". The server device 11 outputs these values while associating the text data "ABC" with the score "0.9" and associating the text data "EFG" with the score "0.1".

The server device 11 transmits the respective text data and the respective scores to the control device 10. The control device 10 receives the respective text data and the respective scores, and searches for stations which are able to rent a vehicle satisfying the conditions such as the desired date and hour for the rental while using the received text data "ABC" as a search keyword. In the meantime, the control device 10 searches for stations which are able to rent a vehicle satisfying the conditions such as the desired date and hour for the rental while using the received text data "EFG" as a search keyword.

The control device 10 generates images to be displayed on the terminal device 3 based on search results and the respective scores. The control device 10 generates the images in which the stations representing the search results are organized depending on the vehicle models. The control device 10 generates images having such a relation that enables the switching display between the search result for the vehicle model "ABC" and the search result for the vehicle model "EFG". The control device 10 transmits the generated images to the terminal device 3.

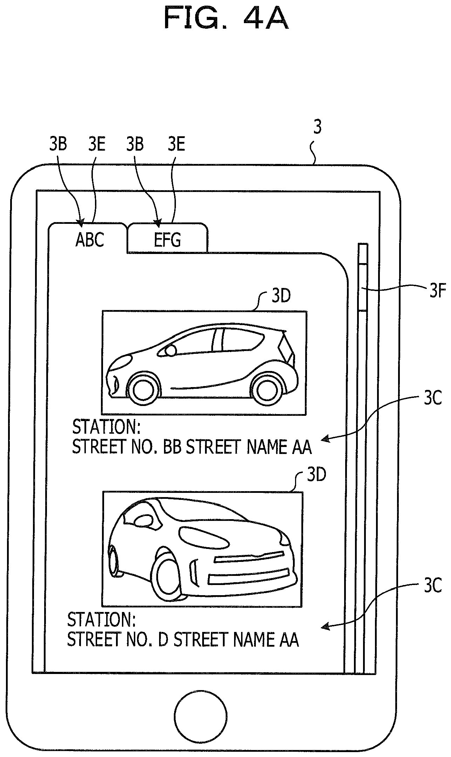

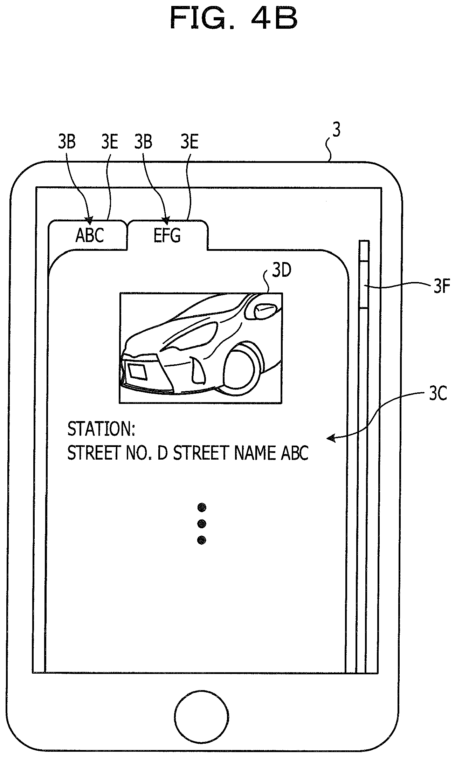

Accordingly, search result images illustrated in FIGs. 4A and 4B are displayed on the terminal device 3. FIG. 4A is a diagram illustrating an example of the search result images of the first embodiment, and FIG. 4B is another diagram illustrating the example of the search result images of the first embodiment.

The terminal device 3 displays the images provided with tabs 3E. The respective tabs 3E indicate corresponding vehicle models 3B, and the images are thus organized depending on the vehicle models 3B. The terminal device 3 displays stations 3C, and images 3D of vehicles held at the stations 3C. First, as illustrated in FIG. 4A, the terminal device 3 displays information concerning the vehicle model 3B "ABC" having the higher score as a first search result. The terminal device 3 displays "Street No. B Street Name AA" as a station 3C which are able to rent a vehicle of the vehicle model 3B "ABC", and an image 3D of the vehicle of the vehicle model 3B "ABC" held at this station 3C. Moreover, the terminal device 3 displays "Street No. D Street Name AA" as another station 3C which are able to rent a vehicle of the vehicle model 3B "ABC", and an image 3D of the vehicle of the vehicle model 3B "ABC" held at this station 3C.

A vertically movable scroll bar 3F is displayed if there are multiple stations 3C in any of FIGs. 4A and 4B, such as three or more stations 3C, which are able to rent a vehicle of the vehicle model 3B "ABC". The user of the terminal device 3 may view the information on each station 3C by vertically moving the scroll bar 3F. Nonetheless, the scroll bar 3F may not have to be displayed.

Meanwhile, when the user touches (clicks) the tab 3E that represents the vehicle model 3B "EFG", the terminal device 3 displays information concerning the vehicle model 3B "EFG" having the lower score as a second search result as illustrated in FIG. 4B. For example, the terminal device 3 displays "Street No. D Street Name ABC" as a station 3C which are able to rent a vehicle of the vehicle model 3B "EFG", and an image 3D of the vehicle of the vehicle model 3B "EFG" held at this station 3C. Here, a vertically movable scroll bar 3F as with the one in FIG. 4A is displayed if there are multiple stations 3C which are able to rent a vehicle of the vehicle model 3B "EFG".

As described above, the terminal device 3 may intelligibly display the search results by organizing the search results depending on the vehicle models.

While this example explains the case in which the top two vehicle models are selected as the vehicle models that are likely to be included in the image transmitted by the user, the top three or more vehicle models may be selected instead. In this case, the terminal device 3 displays three or more tabs 3E side by side in the descending order of the scores.

### (Processing Flow)

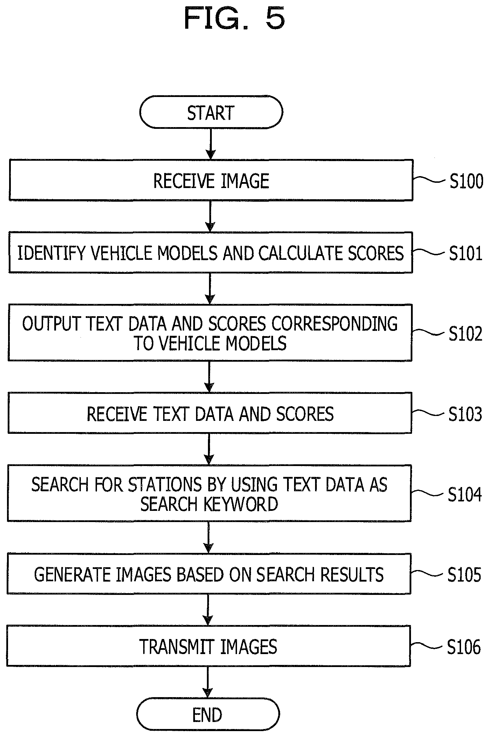

Next, searching processing by the data center 2 of this embodiment is described by using FIG. 5. FIG. 5 is a flowchart illustrating an example of the search processing of the first embodiment. When the image of the vehicle that the user wishes to rent is transmitted from the terminal device 3, the third communication unit 40 of the server device 11 receives the image of the vehicle (S100). Here, the third communication unit 40 receives the image of the vehicle from the reception module 30 of the control device 10 through the second communication unit 21. Meanwhile, the reception module 30 of the control device 10 receives the image of the vehicle from the terminal device 3 through the first communication unit 20.

Next, the analysis module 50 of the server device 11 identifies the vehicle models that are likely to be included in the image of the vehicle, and calculates the scores of the respective vehicle models (S101). Then, the text data output module 51 of the server device 11 outputs the text data and the scores of the identified vehicle models (S102). Next, the third communication unit 40 of the server device 11 transmits the text data and the scores thus outputted to the control device 10, and the second communication unit 21 of the control device 10 receives the text data and the scores (S103).

Then, the station search module 31 of the control device 10 searches for the stations, which are able to rent the vehicle satisfying the conditions including the desired date and hour for the rental, by using the text data as the search keyword (S104). Next, the generation module 32 of the control device 10 generates the images to be displayed on the terminal device 3 based on the search results (S105). Then, the first communication unit 20 of the control device 10 transmits the generated images to the terminal device 3 (S106), and terminates the processing.

### (Effects)

As described above, the data center 2 of this embodiment analyzes the inputted image and outputs the results of determination of the vehicle models that are likely to be included in the image in the form of the text data. Meanwhile, when the outputted text data includes the first vehicle model and the second vehicle model as the results of determination, the data center 2 of this embodiment generates the display screen in which the first search result obtained by conducting the search while using the text data corresponding to the first vehicle model as the search keyword and the second search result obtained by conducting the search while using the text data corresponding to the second vehicle model as the search keyword are organized depending on the first vehicle model and the second vehicle model, respectively. This makes it possible to intelligibly display the search results.

Meanwhile, the data center 2 of this embodiment performs the image analysis by the image analysis by the artificial intelligence, which learns the correlations between the images of multiple vehicle models and the corresponding text data of the vehicle models by the machine learning. Thus, it is possible to perform the image analysis of the image in a similar manner to that performed by human intelligence, and thus to search for the vehicle that the user wishes to rent based on the transmitted image.

In the meantime, the data center 2 of this embodiment searches for the rentable vehicle matching the search keyword with reference to the station information storage unit 22 which stores the information on the rentable vehicles. Thus, it is possible to search for the vehicle that the user wishes to rent.

Meanwhile, the data center 2 of this embodiment generates the display screens that enable the switching display between the display screen of the first search result regarding the first vehicle model and the display screen of the second search result regarding the second vehicle model. This makes it possible to intelligibly display the search results.

### [Second Embodiment]

By the way, a user who wishes to rent a vehicle may select such a vehicle while judging by a detail of the vehicle like a vehicle type rather than by the vehicle model. In this regard, it is conceivable to search for not only the vehicle model but also the detail of the vehicle and to display the search results in an organized manner depending thereon. In this way, it is possible to display various search results effectively.

### (Configuration of Data Center 2)

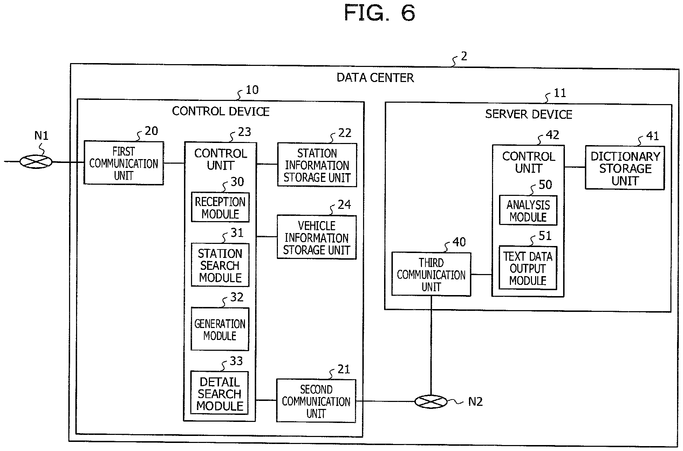

An example of the data center 2 of this embodiment is described by using FIG. 6. FIG. 6 is a diagram illustrating the example of the data center 2 of the second embodiment. In the following embodiment, regions identical to the regions illustrated in the drawings explained earlier are denoted by the same reference numerals and overlapping explanations are omitted.

The control device 10 of this embodiment includes the first communication unit 20, the second communication unit 21, the station information storage unit 22, a vehicle information storage unit 24, and the control unit 23.

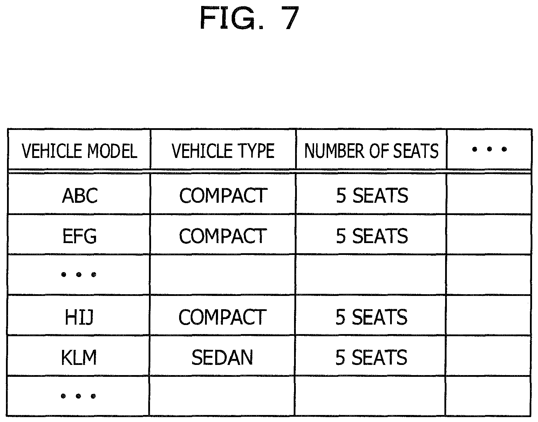

The vehicle information storage unit 24 is a storage device that stores various data. For example, the vehicle information storage unit 24 is a storage device such as a hard disk drive, an SSD, and an optical disk drive. The vehicle information storage unit 24 stores information concerning details of each vehicle model. Examples of the details include "vehicle type" and "number of seats". The detail "vehicle type" represents the type categorized by the shape, size, and the like of each vehicle. Examples of the detail "vehicle type" include "compact", "sedan", "hybrid", "wagon", and the like. The detail "number of seats" is a preset value which represents a maximum passenger capacity including a driver that each vehicle may carry. For example, the vehicle information storage unit 24 stores the vehicle type, the number of seats, and other details depending on the vehicle models as illustrated in FIG. 7. FIG. 7 is a diagram illustrating an example of the vehicle information stored in the vehicle information storage unit 24. Regarding a vehicle of the vehicle model "ABC", the vehicle information storage unit 24 stores the details including the vehicle type "compact", the number of seats "5 seats", and the like. Regarding a vehicle of the vehicle model "EFG", the vehicle information storage unit 24 stores the details including the vehicle type "compact", the number of seats "5 seats", and the like. Moreover, regarding a vehicle of a vehicle model "HIJ", the vehicle information storage unit 24 stores the details including the vehicle type "compact", the number of seats "5 seats", and the like. The details of the respective vehicles are registered, deleted, or updated through the first communication unit 20 by using the not-illustrated terminal of the administrator of the car sharing service, for example.

Next, back to FIG. 6, the control unit 23 of the control device 10 of this embodiment includes the reception module 30, a detail search module 33, the station search module 31, and the generation module 32.

The detail search module 33 searches for a detail that is common to the vehicle models corresponding to the text data outputted from the server device 11. For example, when the data "ABC" and "EFG" are outputted as the text data outputted from the server device 11, the detail search module 33 searches for a detail common to the vehicle models "ABC" and "EFG". As a search result, the detail search module 33 outputs the vehicle type "compact", for example, as the detail common to the vehicle models "ABC" and "EFG". The detail search module 33 searches for the common detail among details determined in advance. Here, the detail to be determined may be set by the user and the like. Meanwhile, if the vehicle models are of different vehicle types, for example, the vehicle type having the higher score may be selected as the detail.

The station search module 31 searches for stations each holding the rentable vehicle based on the information on the date and hour when the user desires to rent the vehicle, on the text data concerning the vehicle models outputted from the server device 11, and on the detail searched by the detail search module 33. The station search module 31 searches for the stations each holding the rentable vehicle based on the text data concerning the vehicle model having the higher score. For example, the station search module 31 searches for the stations which are able to rent the vehicle by using the text data of the vehicle model having the highest score as the search keyword. In the meantime, the station search module 31 searches for the stations which are able to rent the vehicle by using the detail searched by the detail search module 33 as the search keyword.

The generation module 32 generates images to be displayed on the terminal device 3 based on the search result by the station search module 31. To be more precise, the generation module 32 generates the images each of which is organized depending on the vehicle model and the detail when the search result is displayed on the terminal device 3. When the score of the vehicle model "ABC" outputted from the server device 11 is larger than the score of the vehicle model "EFG", for example, the generation module 32 generates images that enable switching display between an image representing the search result on the vehicle model "ABC" and an image representing the search result on the detail "compact".

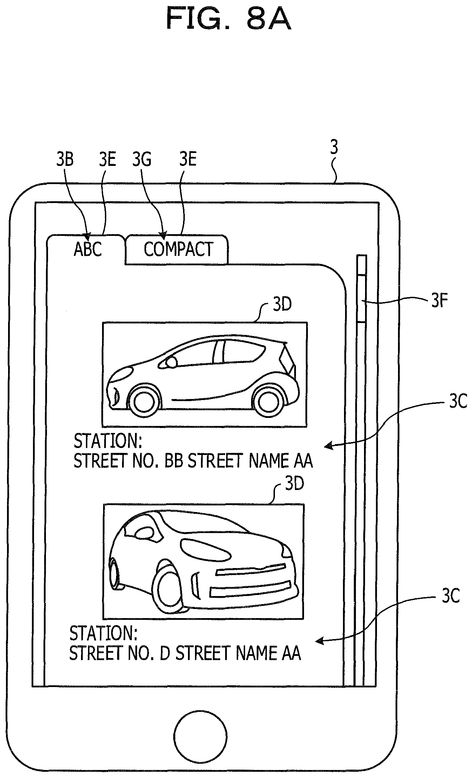

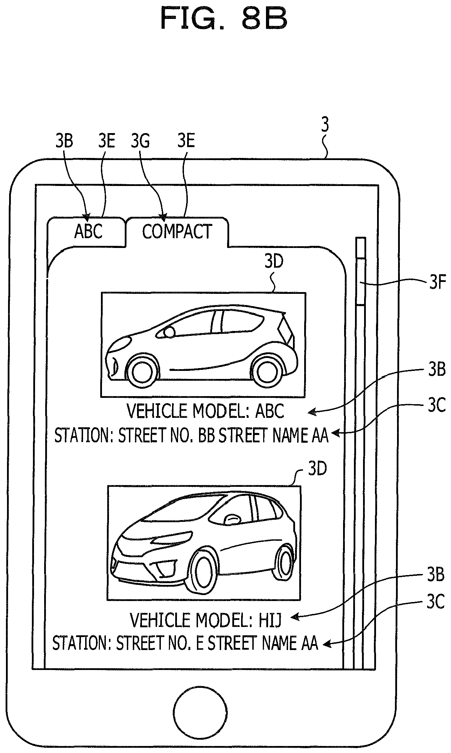

In this way, search result images illustrated in FIGs. 8A and 8B are displayed on the terminal device 3. FIG. 8A is a diagram illustrating an example of the search result images of the second embodiment, and FIG. 8B is another diagram illustrating the example of the search result images of the second embodiment.

The terminal device 3 displays the search result illustrated in FIG. 8A to begin with. The terminal device 3 displays the images provided with the tabs 3E, which are organized depending on the vehicle model 3B and on a detail 3G. As in FIG. 4A, the terminal device 3 displays the stations 3C which are able to rent vehicles of the vehicle model 3B "ABC" having the higher score, and the images 3D of the vehicles of the vehicle model 3B "ABC" held at the stations 3C.

Meanwhile, when the user touches (clicks) the tab 3E that represents the detail 3G "compact", the terminal device 3 displays the stations 3C which are able to rent vehicles satisfying the vehicle type "compact", and the images 3D and the vehicle models 3B of the vehicles held at the stations 3C as illustrated in FIG. 8B. For example, the stations 3C which are able to rent vehicles of any of the vehicle models 3B "ABC", "HIJ", and "EFG" satisfying the vehicle type of "compact", the vehicle models 3B, and the images 3D of the vehicles of the vehicle models 3B held at the stations 3C are displayed as the search results. Although FIG. 8B depicts a display example in which the stations 3C which are able to rent a vehicle of any of the vehicle models 3B "ABC" and "HIJ" are vertically arranged on the same screen for the purpose of illustration, it is to be noted that the stations 3C which are able to rent a vehicle of the vehicle model 3B "EFG", and the like are also displayed thereon. The user may view the information on each station 3C that be able to rent the vehicle of any of the vehicle models 3B by operating the scroll bar 3F. In the meantime, if there are multiple stations 3C that be able to rent a vehicle of the same vehicle model 3B, the terminal device 3 displays the stations 3C and the like which are grouped by each vehicle model 3B.

### (Processing Flow)

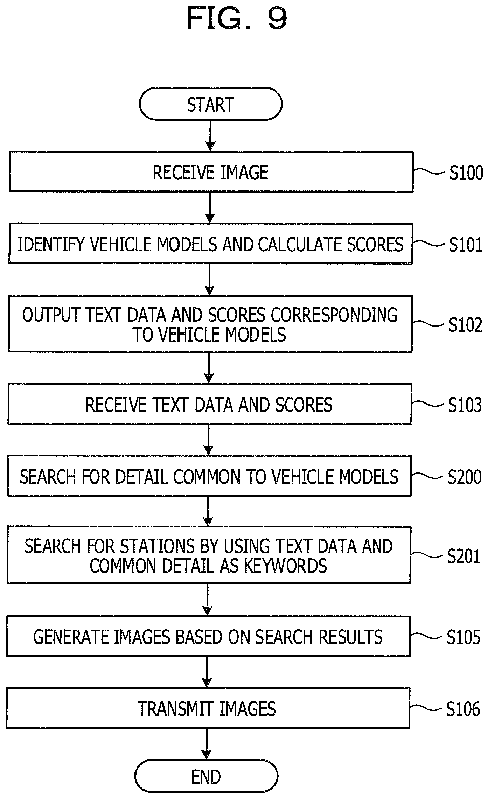

Next, the searching processing by the data center 2 of this embodiment is described by using FIG. 9. FIG. 9 is a flowchart illustrating an example of the search processing of the second embodiment. Note that steps in the following description which have the reference numerals as those illustrated in FIG. 5 are the same steps and detailed explanations thereof are omitted.

As illustrated in FIG. 9, the detail search module 33 of the control device 10 searches for a detail common to the vehicle models corresponding to the text data (S200).

Next, the station search module 31 of the control device 10 searches for the stations which are able to rent the vehicle satisfying the conditions such as the desired date and hour for the rental while using the text data of the vehicle model having the highest score as the search keyword, and searches for the stations which are able to rent the vehicle satisfying the conditions such as the desired date and hour for the rental while using the detail common to the vehicle models as the search keyword (S201).

### (Effects)

As described above, the data center 2 of this embodiment analyzes the inputted image and outputs the results of determination of the vehicle models that are likely to be included in the image in the form of the text data. Meanwhile, when the outputted text data includes the first vehicle model and the second vehicle model as the results of determination, the data center 2 of this embodiment generates the display screen in which the first search result obtained by conducting the search while using the text data corresponding to the first vehicle model as the search keyword and the second search result obtained by conducting the search while using the detail common to the first vehicle model and the second vehicle model as the search keyword are organized depending on the first search result and the second search result, respectively. Thus, it is possible to display various search results by displaying a vehicle model, which is other than the first vehicle model or the second vehicle model but has the detail common to the first vehicle model and the second vehicle model, as part of the search results.

### [Third Embodiment]

While the embodiments of this disclosure have been described above, it is to be understood that this disclosure may also be embodied in various other modes in addition to the above-described embodiments. Each of the above-described embodiments discusses the configuration to organize the search results by displaying the search results while generating the images provided with the tabs. However, this disclosure is not limited only to these embodiments.

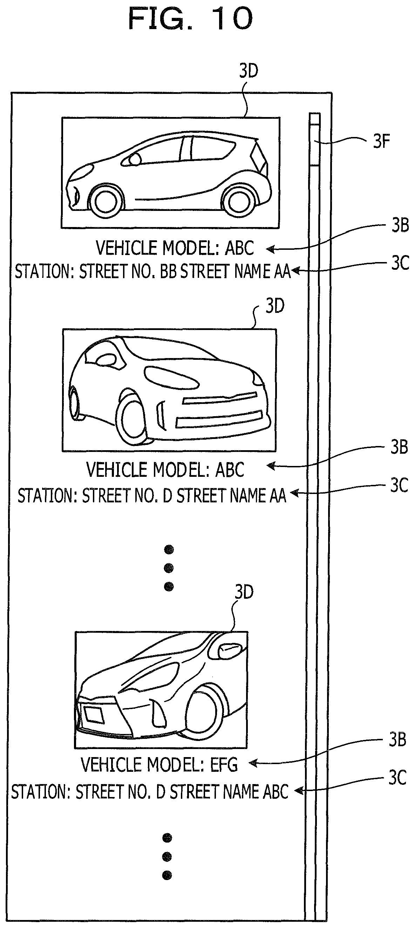

For example, the generation module 32 of the control device 10 may generate such images that organize the search results into different rows and columns on the same screen. For instance, as illustrated in FIG. 10, the generation module 32 generates images which display the search results that are organized into different rows and columns on the same screen depending on the vehicle models. FIG. 10 is a diagram illustrating an example of the search result images of the third embodiment. Note that FIG. 10 depicts only the images while omitting the terminal device 3 for the purpose of illustration. The user may view the search results by operating the scroll bar 3F.

When the obtained search results are similar to those in the first embodiment, the generation module 32 generates the images as illustrated in FIG. 10. First, the images illustrated in FIG. 10 include stations 3C that be able to rent a vehicle of the vehicle model 3B "ABC" having the higher score together with images 3D of the vehicles held at the stations 3C. Moreover, the images illustrated in FIG. 10 are generated as the images that are organized depending on the vehicle models 3B in such a way as to display other stations 3C that be able to rent a vehicle of the vehicle model 3B "EFG" together with images 3D of the vehicles held at the stations 3C below the information on the vehicle model 3B "ABC" mentioned above. This makes it possible to intelligibly display the search results.

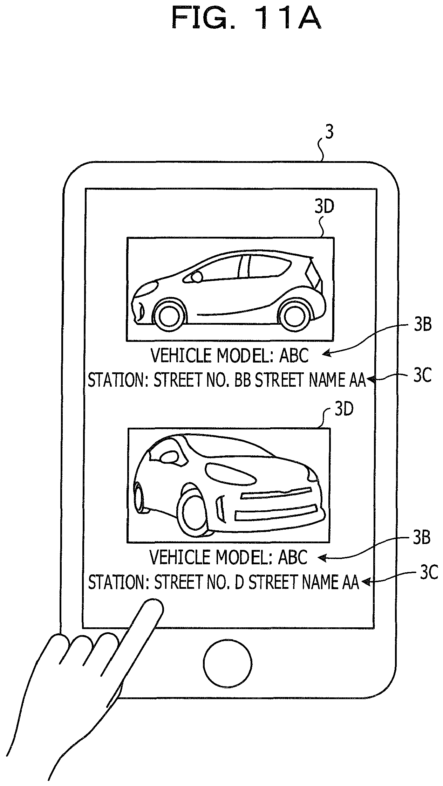

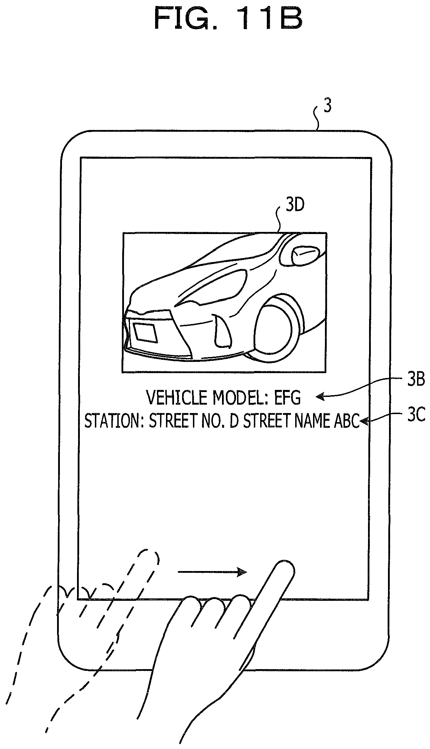

In the meantime, as illustrated in FIGs. 11A and 11B, for example, the generation module 32 may generate images that enable switching display of the search results in accordance with a flick operation or a swipe operation by the user with the terminal device 3. FIG. 11A is a diagram illustrating another example of the search result images of the third embodiment. FIG. 11B is another diagram illustrating the other example of the search result images of the third embodiment.

When the obtained search results are similar to those in the first embodiment, the generation module 32 first generates images as illustrated in FIG. 11A, which display stations 3C that be able to rent a vehicle of the vehicle model 3B "ABC" together with images 3D of the vehicles held at the stations 3C. Moreover, the generation module 32 generates images as illustrated in FIG. 11B, which display stations 3C that be able to rent a vehicle of the vehicle model 3B "EFG" together with images 3D of the vehicles held at the stations 3C when the user performs a flick operation or a swipe operation. This makes it possible to intelligibly display the search results. Note that the screen illustrated in FIG. 11A may further include an arrow or the like that indicates the existence of other images as illustrated in FIG. 11B. In this way, the user of the terminal device 3 may recognize the availability of the display of other images as illustrated in FIG. 11B by performing the flick operation or the swipe operation.

Meanwhile, in each of the embodiments, the data center 2 searches for the stations based on the image prepared by the user. However, this disclosure is not limited only to this configuration. For example, the data center 2 may search for stations based on an image automatically transmitted from the terminal device 3 of the user, and cause the terminal device 3 to display the search results. In other words, the data center 2 may perform push notification. For example, the image to be automatically transmitted from the terminal device 3 of the user may be a photograph of a vehicle on the street liked and shot by the user, or a photograph of a vehicle on a social networking service (SNS) liked and tagged with "like" by the user. Meanwhile, the image to be automatically transmitted from the terminal device 3 of the user may be a photograph displayed on a website bookmarked by the user, or a photograph of a vehicle uploaded by someone who follows the user on the SNS. Furthermore, the image to be automatically transmitted from the terminal device 3 of the user may be a photograph of a car magazine subscribed for by the user, any of photographs of successive vehicles of a favorite brand of the user, a photograph of the vehicle that the user purchased for the first time, or the like. For instance, an image saved in the terminal device 3 or an image on a website is used as the image to be automatically transmitted from the terminal device 3 of the user.

In the meantime, the data center 2 performs the push notification based on schedules of the user or routines of the user, for example. The schedules of the user or the routines of the user are extracted from data stored in a schedule table in the terminal device 3, for example. When the schedule table in the terminal device 3 holds schedules and routines such as "one-day trip to Chinatown in Yokohama on weekend", "homecoming on Golden Week", "moving at the end of March", and "pickup and drop-off at a nursery school", the data center 2 performs the push notification in accordance with the schedules and the routines. The data center 2 analyzes an image automatically transmitted from the terminal device 3 based on each of the schedules of the user and the routines of the user, then conducts the search as in any of the embodiments, then generates the organized images of the search results, and transmits the generated images to the terminal device 3. Thus, it is possible to notify of the search results for the vehicles suitable for the schedules and usages without requesting an operation by the user.

In each of the embodiments, the system 1 searches for vehicles in the car sharing. However, this disclosure is not limited only to this configuration. For example, the system 1 may be used as a system for sharing clothes and the like. For instance, the system 1 of such an embodiment refers to a storage unit that stores training data acquired in advance by machine leaning, then outputs (identifies) text data related to an inputted image, and then searches for other text data corresponding to other images related to the original image and outputs the other text data. Thereafter, the system 1 generates organized images based on the text data, which enable identification of groups classified by the machine learning, and causes the terminal device 3 to display the generated images. Here, when searching for and outputting the text data corresponding to the images similar to the original image, the text data output module 51 may conduct the search by using the text data related to the inputted image and output hit search results.

### (System)

In the meantime, of the respective processing discussed in each of the embodiments, all or part of the processing assumed to be performed automatically may be performed manually instead. Alternatively, all or part of the processing described on the assumption that the processing is to be performed manually may be performed automatically in accordance with a publicly known method instead. In addition, the processing procedures, control procedures, specific names, and information containing various data and parameters illustrated in the foregoing description and in the drawings may be changed as desired unless otherwise specifically stated.

Moreover, it is to be understood that the respective constituents of the illustrated devices are merely functional and conceptual and may not have to be physically configured as illustrated. In other words, specific modes of distribution and integration of the devices are not limited to the illustrated examples. That is to say, all or part of the constituents may be distributed and/or integrated functionally or physically based on desired units depending on various loads, conditions of use, and the like. For example, the server device 11 of the first embodiment may be installed at a different data center from the data center installing the control device 10. In addition, all or a desired part of the processing functions to be realized by the respective devices may be implemented by a CPU and programs to be analyzed and executed by the CPU, or as word logic hardware.

### (Hardware Configuration)

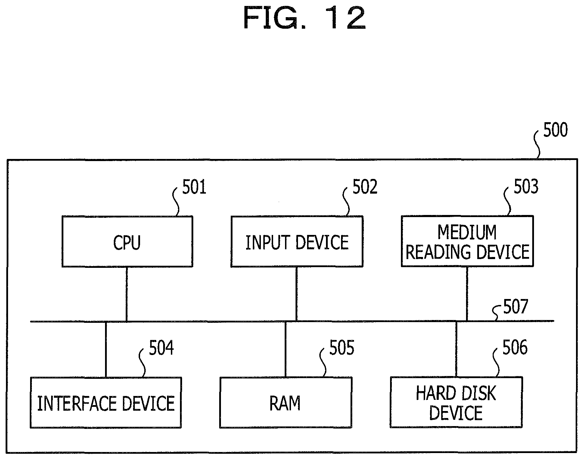

FIG. 12 is a diagram illustrating a hardware configuration example of a computer. As illustrated in FIG. 12, a computer 500 includes a CPU 501 which executes various arithmetic processing, and an input device 502 which accepts input of an image and the like from a user. Moreover, the computer 500 includes a medium reading device 503 which reads a program and the like from a storage medium, and an interface device 504 to be coupled to another device. Furthermore, the computer 500 includes a random access memory (RAM) 505 which temporarily stores various information, and a hard disk device 506. Here, the devices 501 to 506 are coupled to a bus 507.

The hard disk device 506 stores control programs having similar functions to those of respective processing units of the reception module 30, the station search module 31, the generation module 32, the analysis module 50, the text data output module 51, and the detail search module 33 described in the embodiments. Moreover, the hard disk device 506 stores various data for realizing the control programs. The various data include the data in the station information storage unit 22, the dictionary storage unit 41, and the vehicle information storage unit 24.

The CPU 501 performs the various processing by reading the programs stored in the hard disk device 506, developing the programs on the RAM 505, and then executing the programs. The programs may cause the computer 500 to function as the reception module 30, the station search module 31, the generation module 32, the analysis module 50, the text data output module 51, and the detail search module 33 described in the embodiments.

Note that the above-mentioned programs may not have to be stored in the hard disk device 506. For example, the computer 500 may read and execute the programs stored in a storage medium readable by the computer 500. Examples of the storage medium readable by the computer 500 include: a portable recording medium such as a CD-ROM, a DVD disc, and a Universal Serial Bus (USB) memory; a semiconductor memory such as a flash memory; a hard disk drive; and the like. Alternatively, the programs may be stored in a device coupled to any of a public line, the Internet, a local area network (LAN), and the like and the computer 500 may read and execute the stored programs.

### [Reference Signs List]

1system
2data center
10control device
11server device
20first communication unit
21second communication unit
22station information storage unit
23, 42control unit
30reception module
31station search module
32generation module
40third communication unit
41dictionary storage unit
50analysis module
51text data output module

## Claims

1. A method executed by a computer, the method comprising:
receiving an image;
executing an image analysis of the received image;
generating, based on the image analysis, text data indicating a candidate for a model of a vehicle included in the image;
when the text data indicates a first model as the candidate, executing a first search by using the text data as a search keyword; and
displaying, on a display screen, the first model and a first result of the first search.

2. The method according to claim 1, further comprising:
displaying the text data on the display screen before the executing of the first search.

3. The method according to claim 1, further comprising:
when the text data indicates each of the first model and a second model as the candidate, executing the first search and a second search by using the text data as the search keyword; and
displaying, on the display screen, the first result of the first search and a second result of the second search while associating the first result of the first search with the first model and associating the second result of the second search with the second model.

4. The method according to claim 1, wherein
the image analysis is performed by artificial intelligence which learns a correlation between the image of the model and the text data by machine learning.

5. The method according to claim 3, wherein
each of the first search and the second search represents processing to refer to a storage unit storing information on rentable vehicles and to search for the rentable vehicle matching the search keyword.

6. The method according to claim 3, wherein
the first result and the second result are displayed on the display screen switchably.

7. The method according to claim 3, wherein
the first result and the second result are displayed on the display screen while being organized into different rows or columns.

8. The method according to claim 3, wherein
the first result and the second result are displayed on the display screen so as to be switchable to each other by any of a flick operation and a swipe operation.

9. An information processing apparatus comprising:
a memory; and
a processor coupled to the memory and configured to:
receive an image,
execute an image analysis of the received image, generate, based on the image analysis, text data indicating a candidate for a model of a vehicle included in the image,
when the text data indicates a first model as the candidate, execute a first search by using the text data as a search keyword, and
display, on a display screen, the first model and a first result of the first search.

10. The information processing apparatus according to claim 9, the processor is configured to:
display the text data on the display screen before the executing of the first search.

11. The information processing apparatus according to claim 9, the processor is configured to:
when the text data indicates each of the first model and a second model as the candidate, execute the first search and a second search by using the text data as the search keyword, and
display, on the display screen, the first result of the first search and a second result of the second search while associating the first result of the first search with the first model and associating the second result of the second search with the second model.

12. The information processing apparatus according to claim 9, wherein
the image analysis is performed by artificial intelligence which learns a correlation between the image of the model and the text data by machine learning.

13. The information processing apparatus according to claim 11, wherein
each of the first search and the second search represents processing to refer to a storage unit storing information on rentable vehicles and to search for the rentable vehicle matching the search keyword.

14. The information processing apparatus according to claim 11, wherein
the first result and the second result are displayed on the display screen switchably.

15. A program that causes an information processing apparatus to execute a process, the process comprising:
receiving an image;
executing an image analysis of the received image;
generating, based on the image analysis, text data indicating a candidate for a model of a vehicle included in the image;
when the text data indicates a first model as the candidate, executing a first search by using the text data as a search keyword; and
displaying, on a display screen, the first model and a first result of the first search.
